# EUROPEAN PATENT SPECIFICATION

(11) **EP 2 260 596 B1**
(45) Date of publication and mention of the grant of the patent: **13.03.2013**
(21) Application number: 08735991.5
(22) Date of filing: 09.04.2008
(51) Int. Cl.: H04B 10/2587

(54) **IMPROVEMENTS IN OR RELATING TO OPTICAL NETWORKS**
VERBESSERUNGEN IN BEZUG AUF OPTISCHE NETZWERKE
AMÉLIORATIONS APPORTÉES AUX RÉSEAUX À FIBRES OPTIQUES OU CONCERNANT LES RÉSEAUX À FIBRES OPTIQUES

(43) Date of publication of application: 15.12.2010
(73) Proprietor: Telefonaktiebolaget L M Ericsson (PUBL), 16483 Stockholm (SE)
(72) Inventor: BOGONI, Antonella, I-46100 Mantova (IT); POTI, Luca, I-56124 Pisa (IT); FRESI, Francesco, I-07100 Sassari (IT); CAVALIERE, Fabio, Vecchiano (IT); BERRETTINI, Gianluca, I-56100 Pisa (IT)
(74) Representative: Parkinson, Neil Scott
(86) International application number: PCT/EP2008/054265
(87) International publication number: WO 2009/124588

(56) References cited:
- EP-A- 0 615 358
- US-A1- 2006 093 360

## Description

### Technical Field

The invention relates to improvements in or relating to Optical Networks, and in particular, although not exclusively to Passive Optical Networks.

### Background

The increasing popularity and growth of the Internet and the World Wide Web is changing the demand for on-line services from voice and text services to data and image services. This evolution is continuing toward video based services that require higher data transmission rates. Such new broadband applications typically require that the existing copper access infrastructure and the bandwidth availability are upgraded.

Furthermore, traffic patterns are increasingly becoming symmetric such that the amount of data transmitted by a user is about the same as the amount of data received by a user. The trend for networks providing high speed and symmetric data transmission capable of providing guaranteed bandwidths for a particular user is continuing. The international standard for the transmission length between a user and the Central Office (CO) is 20 km, but conventional access networks based on a copper cable pair are not designed to meet these requirements due to the limited bandwidth-distance product. For example, known sophisticated transmission technologies are only capable of providing a transmission distance of up to 100m at data rates of 100 Mb/s.

It is known to provide an optical Fibre-To-The-Home or Premise (FTTH/P) network, for example, a Passive Optical Network (PON) that allows a single optical fibre to serve multiple end users. Such a PON is attractive because of the low installation and maintenance costs, and because of the intrinsic high bandwidth. Such a PON is considered to be passive because it utilises unpowered optical splitters which enable a single optical fibre to send data to multiple users and thus no active elements are utilized between the CO and the customer premises in the downstream direction.

It is also known to provide a Wavelength Division Multiplexing PON (WDM-PON) which uses multiple optical wavelengths to increase the upstream and/or downstream bandwidth available for end users. The multiple wavelengths of a WDM-PON can be used by different Optical Network Units (ONUs) to create several virtual PONs which co-exist on the same physical infrastructure. A problem associated with existing PONs and WDM-PONs is that active optical components are often required at the user location so that user data can be transmitted in the upstream direction.

In such PONs it is known to transmit one carrier wavelength in the downstream direction from the CO to end users, and a different wavelength in the upstream direction from the end users to the CO. The two wavelengths are different to minimise interference so that it is possible to use the same fibre in the downstream and upstream directions. Such a PON reduces the requirement for CO equipment and the amount of optical fibre. Typically a laser is required to be placed in a remote cabinet close to the user for communication in the upstream direction. Such a remote cabinet imposes strict requirements in terms of cost, power consumption and reliability. These requirements could not be met by lasers typically available, especially when Wavelength Division Multiplexing (WDM) transmission is used to increase the system capacity.

A typical known WDM-PON operates most effectively using a Non Return-to-Zero (NRZ) or Inverse-Return-to-Zero (IRZ) optical data signal because of the confined bandwidth occupation. Such data formats facilitate upstream data transmission and are typically used to provide an asymmetrical network. A problem with using these modulation formats is that robustness to chromatic dispersion and Inter-Symbol Interference (ISI) in the optic fibre link is reduced.

US Patent Application No. 2006/0093360 A1 (KIM ET AL.) discloses a Wavelength Division Multiplexing Passive Optical Network wherein each Optical Network Terminal comprises means to receive and decode an optical signal, flatten the received optical signal and re-modulate the signal for upstream transmission, said means comprising a reflective semiconductor optical amplifier.

### Summary

An object of the invention is to provide a way of improving an optical communication network whilst reducing or minimising the above-mentioned problems.

According to a first aspect of the invention there is provided an apparatus arranged to receive a modulated optical signal. The signal comprising a carrier wavelength and optical data. The apparatus being arranged to substantially erase the data from the optical signal. The apparatus being arranged to receive user data. The apparatus being arranged to modulate the carrier wavelength with the user data for onward transmission of the user data. The apparatus includes an optical amplifier, the optical amplifier is operable to substantially erase the data from the optical signal, to receive user data, and to modulate the carrier wavelength with the user data for onward transmission of the user data. The apparatus is arranged to operate with the optical signal having a return-to-zero modulation format. The optical amplifier is arranged to be operated substantially at or close to its gain saturation threshold such that the amplifier is made to saturate when a higher level of the return-to-zero modulation format optical signal occurs and to amplify when a layer level of the return-to-zero modulation format occurs.

Such an apparatus avoids the need for a light source at the user location such as a laser because the received optical signal can be re-modulated for upstream transmission. Active optical components such as lasers are expensive, add complexity and generally add to the component count of the network which increases the likelihood that breakdowns will occur. Eliminating the need for a light source at the user location reduces costs and complexity of the network equipment. Such operation of the amplifier provides an advantageous erasing property of the downstream optical signal.

Preferably the apparatus is arranged to split the received optical signal into at least two portions. Such splitting of the optical signal may be performed by, for example, an optical splitter or a filter.

Preferably the apparatus is arranged to split the received optical signal into unequal portions, each portion comprising the modulated optical signal. This has the advantage of allowing, for example, the carrier wavelength of the larger portion to be re-modulated with user data. Using such a larger portion reduces the need to amplify the carrier wavelength.

Preferably the optical amplifier is reflective semiconductor optical amplifier.

Preferably the apparatus is arranged to transmit the user data with a return-to-zero modulation format.

Using a Return-to-Zero (RZ) modulation has the advantage of being able to use substantially the same bit-rate for upstream and downstream communication, such that the user is provided with a symmetrical optical fibre link. Furthermore, using the RZ format provides greater robustness to chromatic dispersion and Inter-Symbol Interference (ISI) in the optical fibre link. Such a modulation format also has the advantage of avoiding the requirement for a complex multi-level receiver which further improves simplicity in the network, and reduces costs. Such a format also avoids the need for wavelength stabilization at the apparatus.

Preferably the apparatus is arranged to use a Wavelength Division Multiplexing signal for transmission of data. Alternatively the apparatus is arranged to use a Time Division Multiplexing signal for transmission of data.

Preferably the apparatus has a single optical fibre to receive the modulated optical channel. Preferably the apparatus is arranged to transmit the user data over the single optical fibre. Using a single optical fibre is advantageous because the upstream and downstream signals share the same fibre and thereby maximize the system efficiency whilst keeping costs to a minimum.

Preferably the apparatus is arranged to transmit at least one of the modulated optical signal in a downstream direction, and the user data in an upstream direction.

Preferably the apparatus is further arranged to transmit the received optical data to a user device.

According to a second aspect of the invention there is provided a method of providing communications services. The method including receiving a modulated optical signal comprising a carrier wavelength and optical data. The method further including substantially erasing the data from the optical signal. The method including receiving user data. The method further including modulating the carrier wavelength with the user data for onward transmission of the user data. The method includes substantially erasing the data from the optical signal, receiving user data, and modulating the carrier wavelength with the user data using an optical amplifier. The method includes receiving the optical signal with a return-to-zero modulation format. The method includes operating the optical amplifier substantially at or close to its gain saturation threshold such that the amplifier is made to saturate when a higher level of the return-to-zero modulation format optical signal occurs and to amplify when a layer level of the return-to-zero modulation format optical signal occurs.

Such a method has the advantage of reusing the downstream signal to generate the upstream signal. Reusing the downstream signal avoids the requirement for a light source such as expensive laser equipment at or near to the user location.

Preferably the method includes splitting the received optical signal into at least two portions, each portion comprising the modulated optical signal. Such splitting of the optical signal may be performed by, for example, an optical splitter or a filter.

Preferably the method includes splitting the received optical signal into unequal portions, each portion comprising the modulated optical signal.

Preferably the method includes transmitting the user data using an optical amplifier.

Preferably the method includes using a reflective semiconductor optical amplifier as the optical amplifier.

Preferably the method includes transmitting the user data with a return-to-zero modulation format.

Preferably the method includes using a Wavelength Division Multiplexing channel for transmission of data. Alternatively the method includes using a Time Division Multiplexing signal for transmission of data.

Preferably the method includes transmitting at least one of the modulated optical signal in a downstream direction, and the user data in an upstream direction.

Preferably the method includes receiving the modulated optical channel from the upstream direction via a single optical fibre. Preferably the method includes transmitting the optical signal in the upstream direction over the single optical fibre.

Preferably the method further includes transmitting the received optical data to a user device.

According to a third aspect of the invention there is provided a method of operating a communications network for providing communications services, the method including;
receiving a modulated optical signal comprising a carrier wavelength and optical data;
substantially erasing the data from the optical signal;
receiving user data; and
modulating the carrier wavelength with the user data for onward transmission of the user data.

Preferably the method includes splitting the received optical signal into at least two portions, each portion comprising the modulated optical signal. Such splitting of the optical signal may be performed by, for example, an optical splitter or a filter.

Preferably the method includes splitting the received optical signal into unequal portions, each portion comprising the modulated optical signal.

Preferably the method includes substantially erasing the data from the optical signal, receiving user data, modulating the carrier wavelength with the user data, and transmitting the user data using an optical amplifier.

Preferably the method includes using a reflective semiconductor optical amplifier as the optical amplifier.

Preferably the method includes operating the reflective semiconductor optical amplifier substantially at or close to its gain saturation threshold.

Preferably the method includes receiving the optical signal with a return-to-zero modulation format. Preferably the method includes transmitting the user data with a return-to-zero modulation format.

Preferably the method includes using a Wavelength Division Multiplexing channel for transmission of data. Alternatively the method includes using a Time Division Multiplexing signal for transmission of data.

Preferably the method includes at least one of transmitting the modulated optical signal in a downstream direction, and the user data in an upstream direction.

Preferably the method includes receiving the modulated optical channel from the upstream direction via a single optical fibre. Preferably the method includes transmitting the optical signal in the upstream direction over the single optical fibre.

Preferably the method further includes transmitting the received optical data to a user device.

According to a fourth aspect of the invention there is provided a communications node for providing communications services to at least one user device, the node being arranged to transmit at least one modulated optical signal, wherein each signal comprises a carrier wavelength and optical data for the at least one user, the node being further arranged to receive an optical signal comprising the at least one carrier wavelength which has been modulated with user data from the at least one user device.

According to a fifth aspect there is provided a communications network including an apparatus according to the first aspect, or arranged to perform a method according to the second aspect, or a communications node according to the fourth aspect.

It will be appreciated that any preferred or optional features of one aspect of the invention may also be preferred or optional feature of other aspects of the invention.

### Brief Description of the Drawings

Other features of the invention will be apparent from the following description of preferred embodiments shown by way of example only with reference to the accompanying drawings, in which;
**Figure 1** shows a Wavelength Division Multiplexing Passive Optical Network architecture according to an embodiment of the invention;
**Figure 2** shows an experimental setup for the network architecture of Figure 1;
**Figure 3** shows output spectra and signal pulses at various parts of the experimental setup of Figure 2;
**Figure 4** shows measured characteristics of the Reflective Semiconductor Optical Amplifier of Figure 2;
**Figure 5** shows an optical receiver for use in the experimental setup of Figure 2;
**Figure 6** shows bit error rate curves for the downstream and upstream signals;
**Figure 7** shows graphs of receiver sensitivity;
**Figure 8** shows eye diagrams at various points in the experimental setup of
Figure 2;

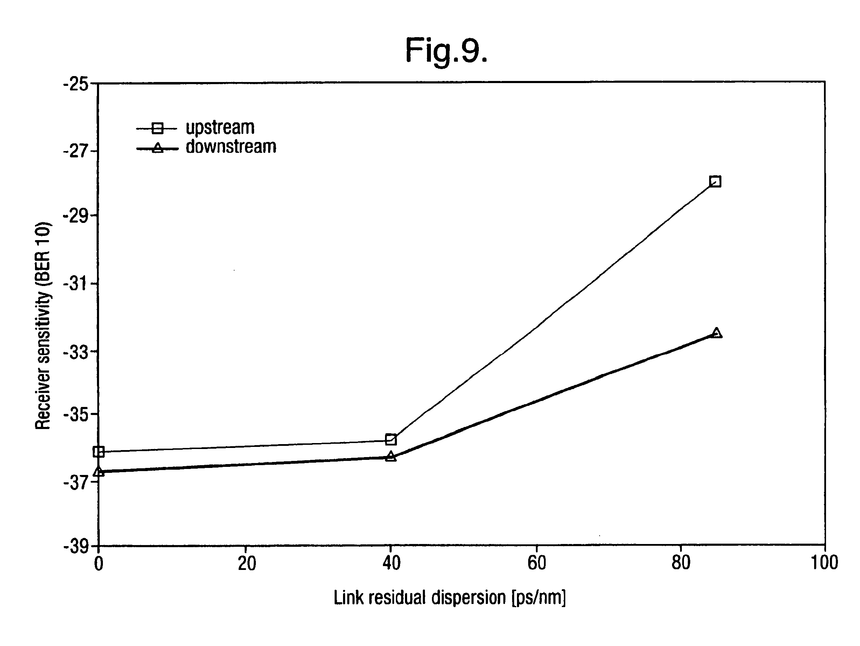

**Figure 9** shows graphs illustrating the upstream and downstream receiver sensitivity; and

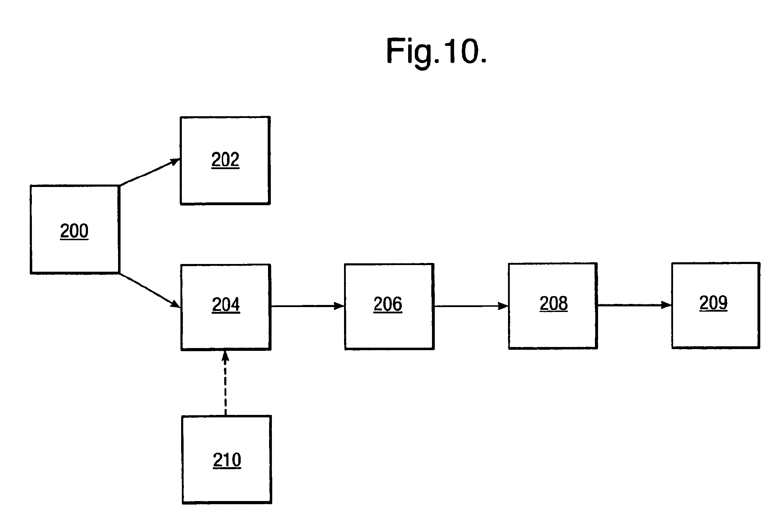

**Figure 10** shows a flow diagram illustrating a method according to an embodiment of the invention.

### Detailed Description

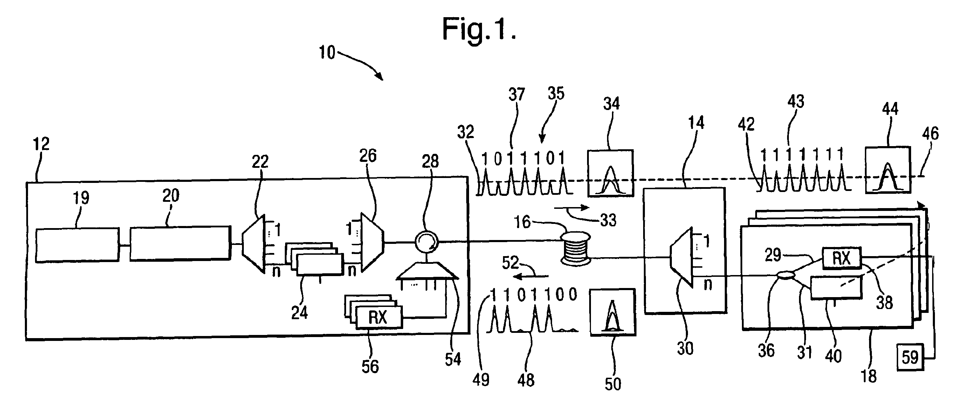

Figure 1 shows a Wavelength Division Multiplexing Passive Optical Network (WDM-PON) architecture according to an embodiment of the invention, generally designated 10. The network 10 comprises a Central Office (CO) node 12, also known as an Optical Line Termination (OLT) node, in communication with a Wavelength Division Multiplexing (WDM) distribution node 14 via a single optical fibre 16. Such a single optical fibre 16 is advantageous because the upstream and downstream signals share the same fibre and thereby maximize the system efficiency whilst keeping costs to a minimum. The WDM distribution node 14 is in communication with a user via an Optical Network Unit (ONU) 18. Figure 1 has been simplified for the purposes of clarity to show one ONU 18 but it will be appreciated that in the real world example, there may be N such ONUs 18 where each ONU 1,8 serves a respective user. In this example N is typically forty. Each ONU 18 is a single user device. In Figures 1, 2 and 5 optical connections are represented with solid lines.

In Figure 1 the CO node 12 comprises a Mode Locked Laser Source (MLLS) 19 capable of producing a Return-to-Zero (RZ) pulse train. The MLLS 19 outputs to a supercontinuum generator 20 which in turn outputs to a first Array Waveguide Grating (AWG) 22 operating as a demultiplexer. The arrangement of the MLLS 19, supercontinuum generator 20, and AWG 22 produces RZ pulsed carriers at different wavelengths on respective outputs 1 to N from the AWG 22. These RZ pulsed carriers are individually On-Off Key (OOK) modulated at a modulator 24 by user data. It will be appreciated that each output 1 to N has a respective modulator 24. These 1 to N outputs are then input to a second AWG 26 operating as a multiplexer. The multiplexed tributary channels at different wavelengths are then passed on to an optical circulator 28 and then transmitted through the optic fibre 16 to the WDM distribution node 14. At the WDM distribution node 14 the tributary channels 1 to N are passively separated by means of a third AWG 30 and then sent on to respective ONUs 18 for transmission to the users.

Figure 1 includes graphs 32 and 34 that show one modulated signal 35 in the optic fibre 16 in a downstream direction 33 output from the CO node 12. Graph 32 shows the downstream modulated signal 35 output from the optical circulator 28 as a data series 37 of ones and zeros 10111101, and illustrates that the downstream modulation depth for the zeros is intentionally not minimised as shown in the graph 34. This has the advantage of making the carrier recovery easier at the ONU 18 as described below.

At the ONU 18 the downstream data is divided into two streams 29, 31 by means of an asymmetrical optical splitter 36. The smaller portion 29 of the signal, carrying the downstream information, is detected by an optical receiver 38 for onward transmission to a user device 59. The larger portion 31 of the signal is sent to a Reflective Semiconductor Optical Amplifier (RSOA) 40. The RSOA 40 is capable of receiving the optical data signal and partially erasing the data exploiting the device saturation properties. It will be appreciated that any optical device could be used in place of the RSOA that achieves this result. For example, an Erbium Doped Fibre Amplifier (EDFA) could be used, although it is less preferable because it requires a higher power to reach saturation.

In the upstream direction the RSOA 40 transmits an optical data signal in a modulated form corresponding to the modulation of an injection current of the RSOA 40. In this way the downstream optical signal is re-modulated with the upstream user data. Figure 1 includes a graph 42 which shows how the data signal has been changed so that it is comprised of a data series of ones 1111111. The data series operates as a carrier wavelength 43 for transmission of user data in the upstream direction. A further graph 44 shows that the data signals above a certain minimum threshold 46 will be regarded as ones.

The signal from the RSOA 40 is transmitted to the WDM distribution node 14, where all upstream channels from other ONUs 18 (not shown) are combined by the AWG 30 which operates as a multiplexer in the upstream direction.

Figure 1 includes graphs 48 and 50 that show one modulated signal in the optic fibre 16 in an upstream direction 52 output from the WDM distribution node 14. Graph 48 shows the upstream modulation signal output from the WDM distribution node 14 with user data 49 as a series of ones and zeros 1101100. Graph 50 also illustrates that the upstream modulation depth for the zeros is less than the modulation depth for the downstream optical signal as shown in the graph 34. This has the advantage of allowing the zeros in the downstream and upstream direction to be more clearly distinguished from one another.

The multiplexed signal 48 is then passed on to the CO node 12 over the optical fibre 16. At the CO node 12 the multiplexed signal is receive at the optical circulator 28 where it is passed on to a third AWG 54 of the CO node 12 that operates as a demultiplexer. Each user channel is then received by a photodetector 56 and then further transmitted in the upstream direction as required.

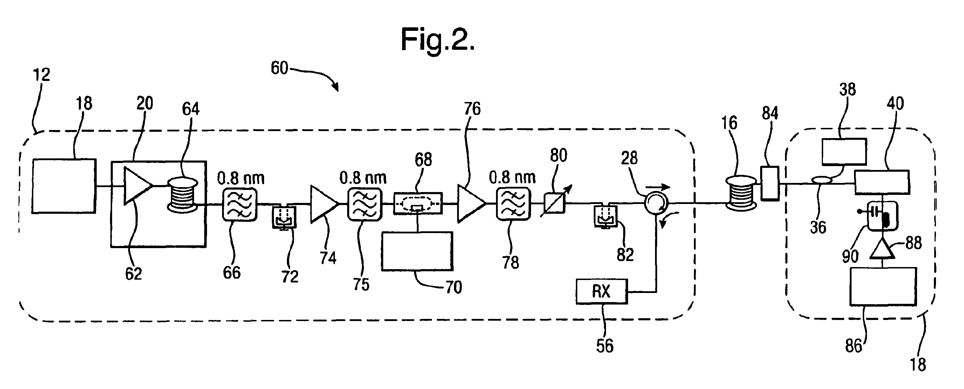

Figure 2 shows an experimental setup for the network architecture of Figure 1, generally designated 60. Like features between Figure 1 and Figure 2 are shown with the same reference numeral. In Figure 2 at the CO node 12 a RZ pulse train 10 ps wide at 2.5 Gb/s is generated by the MLLS 19 operating at 1550 nm. To investigate the effectiveness of the ONU 18 with the RSOA 40 only a single channel was transmitted from the CO node 12. To achieve this the MLLS 19 was output to the supercontinuum generator 20 which comprised of an EDFA 62 and a Highly Non-Linear Fibre (HNLF) 64 which was 250m long. The supercontinuum generator 20 produces a 44 nm wide supercontinuum spectrum, which is a very broadband light source generated by nonlinear processes. The supercontinuum generator 20 was output to a 0.8nm optical tuneable Band-Pass Filter (BPF) 66 which was used instead of the AWG 22 of Figure 1 to extract one of the carrier signals from the supercontinuum spectrum. The supercontinuum generator 20 exploits the property of production of a broadband spectra when a very high power optical signal passes through a nonlinear optical medium.

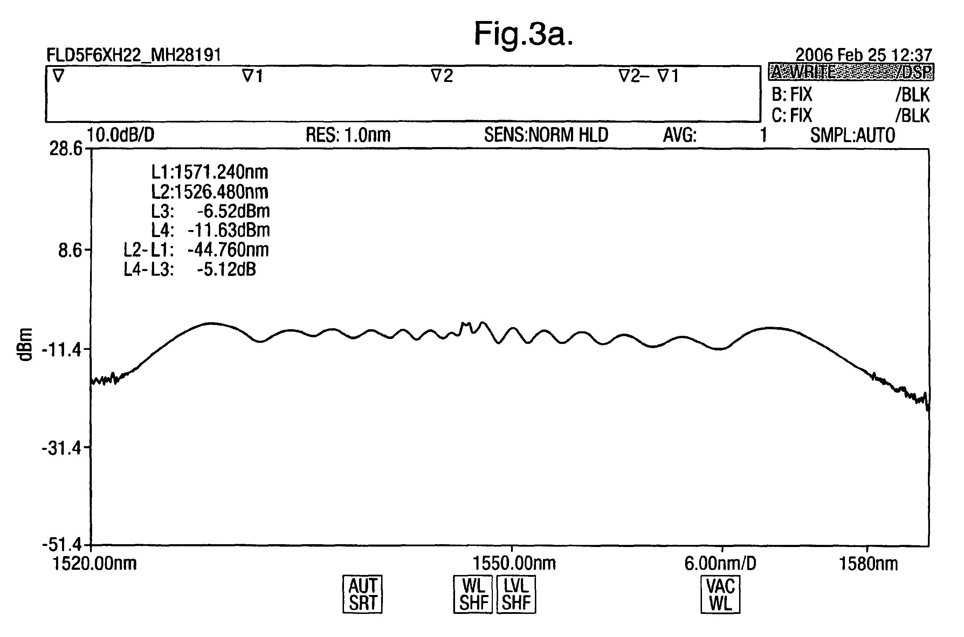

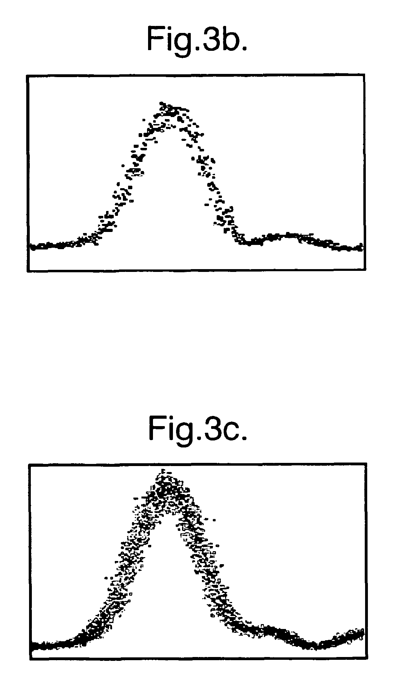

In the experimental arrangement of Figure 2 is was noticed that moving the central wavelength of the BPF 66 on the ITU grid the signal quality in terms of amplitude and phase noise is comparable with the original signal input to the BPF 66. In particular the amplitude noise was less than 0.5%, and the phase noise measured from 1 KHz to 40 MHz was less than 10⁻¹² seconds. For this experiment the BPF 66 central wavelength was set at 1555 nm. Figure 3 shows output spectra and signal pulses at various parts of the experimental setup of Figure 2. Figure 3a shows the supercontinuum spectrum from the supercontinuum generator 20. Figure 3b shows the RZ signal from the MLLS 19. Figure 3c shows the filtered RZ signal from the BPF 66.

Returning to Figure 2 the downstream RZ data signal was obtained by modulating the RZ signal using a Mach-Zehnder modulator (MZ-MOD) 68. The MZ-MOD 68 was driven by a Pseudo-Random Binary Sequence (PRBS) electrical signal which was 2⁷-1 in length (i.e. a binary sequence of 127 in length) generated by a Bit Pattern Generator (BPG) 70. An appropriate bias voltage regulation applied to the MZ-MOD 68 permits the modulation depth of the downstream signal Error Rate (ER) to be set as appropriate. An Optical Delay Line (ODL) 72 and an EDFA 74 preamplifier are used before the MZ-MOD 68 in order to time-align the RZ signal with respect to the electrical data pattern from the BPG 70, and to amplify the signal to compensate for losses caused by the MZ-MOD 68. The optical signal was input to a further 0.8nm optical tuneable BPF 75 before being input to the MZ-MOD 68. The downstream RZ data signal output from the MZ-MOD 68 was then amplified by a further EDFA 76 and then filtered by a band-pass tuneable filter 78 operating at 0.8 nm-bandwidth in order to remove any out-of-band noise. The optical data signal was then input to a Variable Optical Attenuator (VOA) 80, and then a further ODL 82 before being passed on to the optical circulator 28. The obtained single tributary channel containing optical data was than launched into a 20 km-long Standard Single Mode Fiber (SMF) 16 and a 2.7 km-long Dispersion Compensating Module (DCM) 84. The DCM 84 operated to substantially removed the dispersion effect due to the SMF 16. In order to avoid nonlinear impairments on the transmission link, the launch power into the SMF 16 was kept below 2 dBm.

After the DCM 84 the optical data signal was input to the asymmetrical 90/10 optical splitter 36 of the ONU 18 which permitted selection of the smaller 10% portion of the downstream signal to be sent to the downstream receiver 38. The 90% portion of the optical data signal was simultaneously forwarded to the RSOA 40 from the optical splitter 36. At the RSOA 40 the downstream data was partially erased due to the RSOA 40 saturation properties to produce an optical signal comprised of ones e.g. 11111. The upstream modulation was subsequently applied to this optical signal. This upstream data signal was generated by modulating a bias current of the RSOA 40 by means of a PRBS electrical signal which was 2⁷-1 in length generated by the BPG 86 working at 2.5 Gb/s. A DC bias current of the RSOA 40 was fixed to 75 mA at the ONU 18 to maximize gain of the RSOA 40. The electrical modulation signal provided by the BPG 86 was amplified by an electrical driver 88 and coupled by means of a T-bias device 90 to the RSOA 40. The T-bias device 90 permits coupling a Direct Current (DC) voltage with a RF (Radio Frequency) voltage. The applied peak-to-peak Radio Frequency (RF) voltage, carrying the user data stream, was set to the maximum value (4 V) so that for a given electrical input impedance of 50 ohm, the maximum peak-to-peak AC applied current is 80 mA. In this way the modulation depth is maximized.

This upstream optical data signal was then transmitted from the RSOA 40 through the 2.7 km-long DCM 84 and the 20km-long SMF 16. In this way the upstream and downstream optical data signals use the same optical fibre. The upstream optical data signal was then received at the circulator 28 of the CO node 12, where it was passed on to the receiver 56.

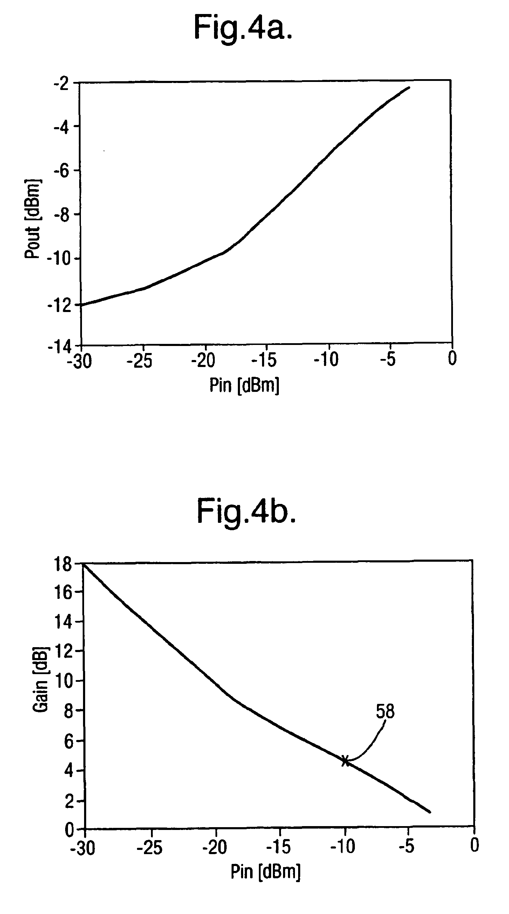

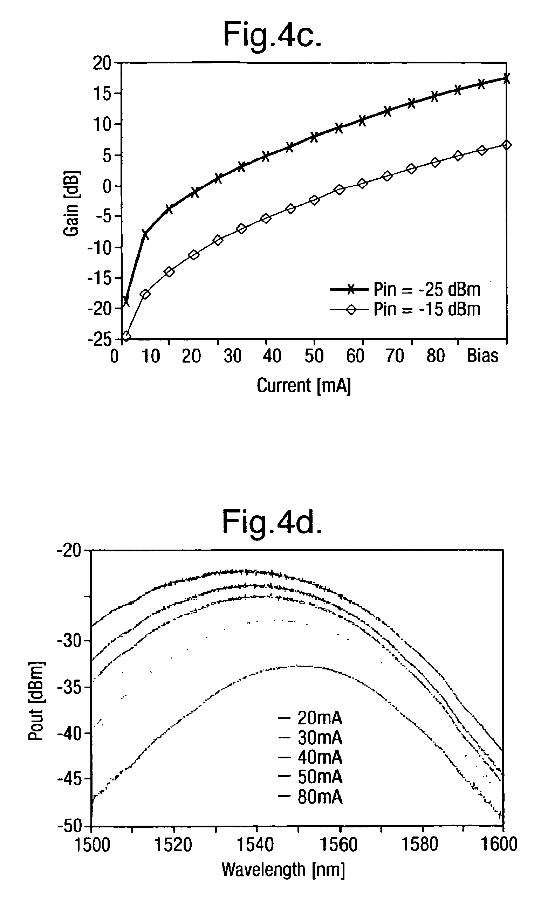

Figure 4 shows measured characteristics of the RSOA 40 used in the experimental arrangement of Figure 2. The RSOA 40 is a device available from the company CIP who supply advanced photonic components. The RSOA 40 had a small signal gain of 20 dB, a saturated output power of 3 dBm, a low Polarization Dependent Gain (PDG) and an ultra-low front facet reflectivity (<10⁻⁵). A device characterization was performed before putting together the experimental setup of Figure 2 in order to set appropriate parameters for effective working of the RSOA 40. Figure 4a shows the input power against the output power at 1550 nm, 75 mA and 25°. Figure 4b shows the input power against gain at 1550 nm, 75 mA and 25°. Figure 4c illustrates the gain of the RSOA 40 as a function of the applied bias Direct Current (DC) at 1550 nm and 25°. Figure 4d shows the Amplified Spontaneous Emission (ASE) noise spectrum of the RSOA 40 for several bias current values. Together Figures 4a - 4d permit working parameters of the RSOA 40 to be defined so that the experimental setup 60 of Figure 2 is optimised to find a good compromise between upstream and downstream performance.

It has been discovered that in order to obtain a good erasing property of the downstream optical signal the RSOA 40 should be operated near to the gain saturation regime. In the experimental setup 60 of Figure 2 the input power of the RSOA 40 was kept at more than -10 dBm (shown at 58 on graph 4b) which made the device saturate when the high level signal (i.e the ones in the optical data signal) occurs. This also permits adequate low level signal (i.e. the zeros in the optical data signal) amplification.

It will be appreciated that the optical data in the downstream optical signal is substantially or partially erased so that it is possible to write new data to the carrier wavelength whereby any remaining parts of the old optical data do not interfere with the new optical data. Whereas the optical data in the downstream optical signal is mostly erased, it will be appreciated that if it is not fully erased the network 10 may still function correctly to transmit user data in the upstream direction, as shown by the graph 42.

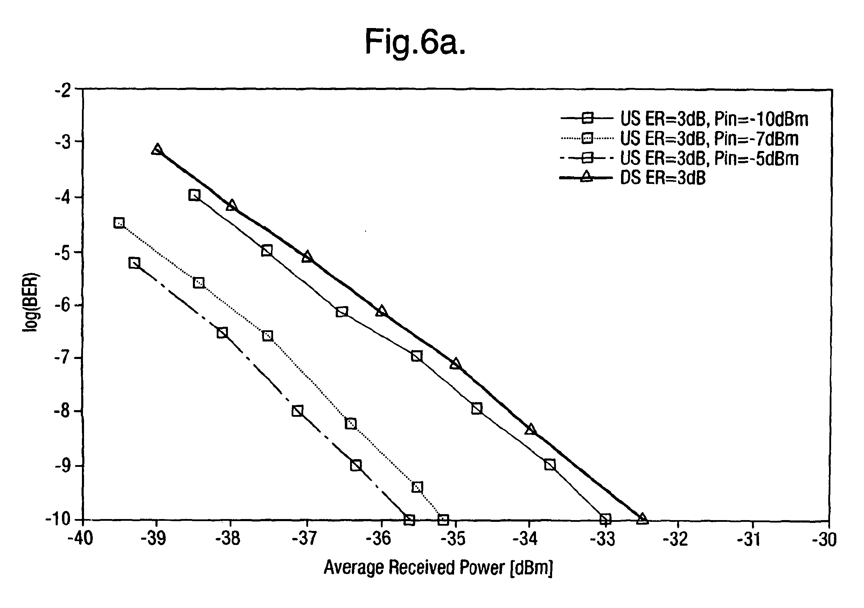

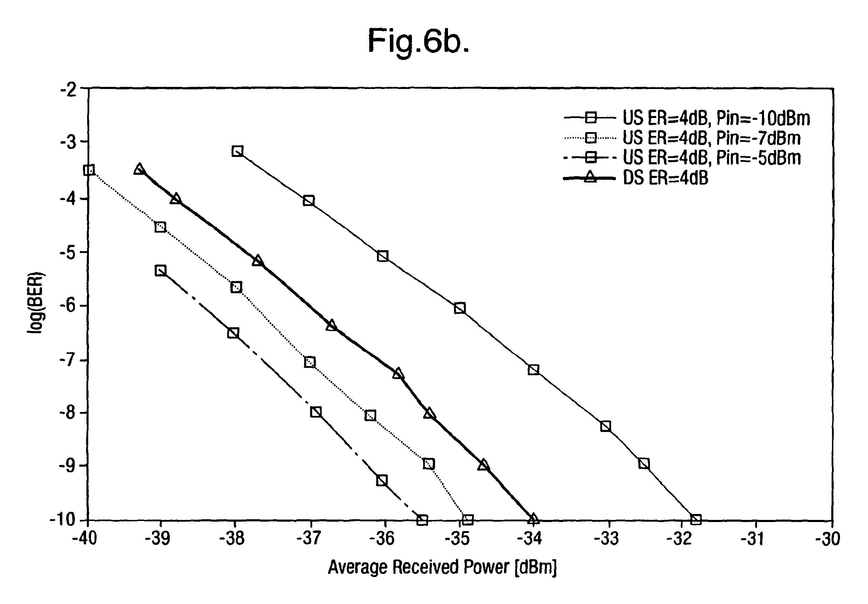

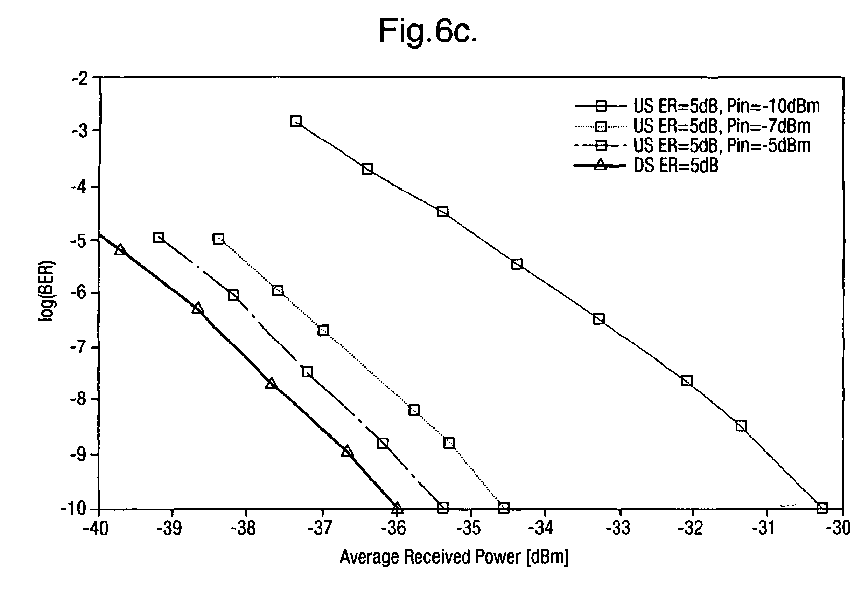

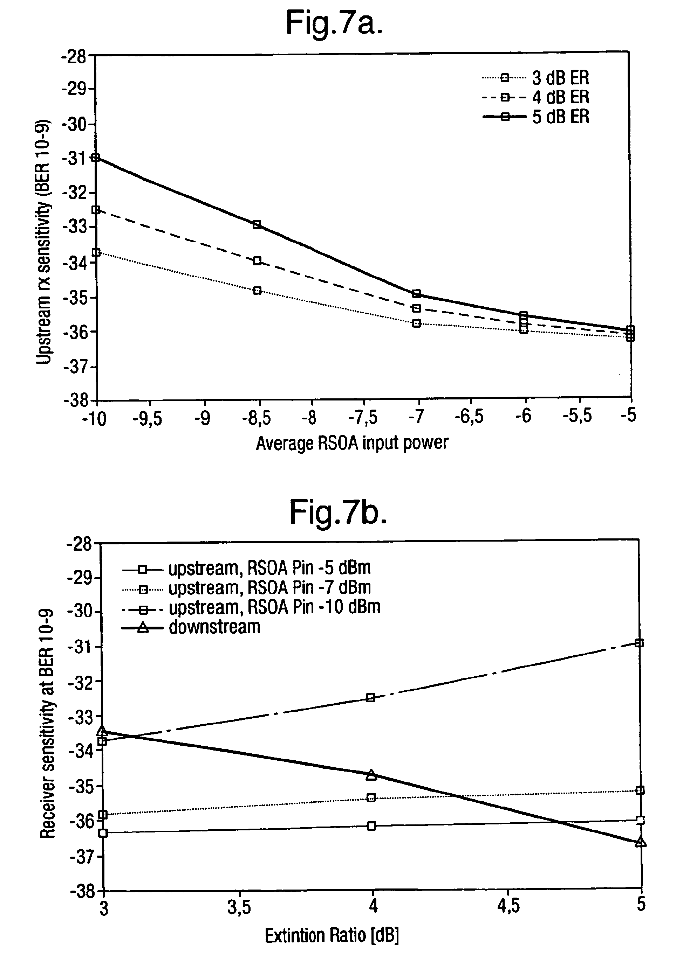

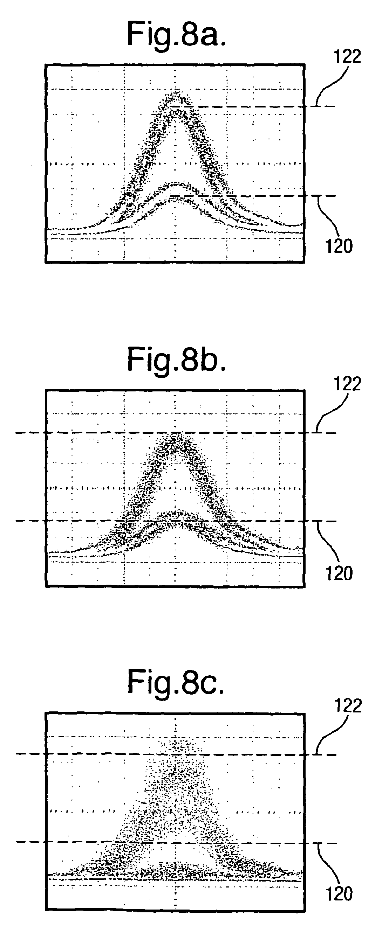

It has been observed that as the downstream Extinction Ratio (ER) value increases, the downstream performance in terms of power sensitivity improves, whilst the upstream performance deteriorates. For this reason, the performance of the RSOA 40 for different RSOA input power values (-5, -7 and -10 dBm) and for different downstream ER values (3, 4 and 5 dB) were investigated and the results are presented in Figures 6 and 7. Furthermore, in order to investigate transmission impairments due to link residual chromatic dispersion effects, the upstream and downstream performances for accumulated dispersion values of 40 ps/nm and 85 ps/nm, and in the case of fully compensated link have been also evaluate and the results are presented in Figures 8 and 9.

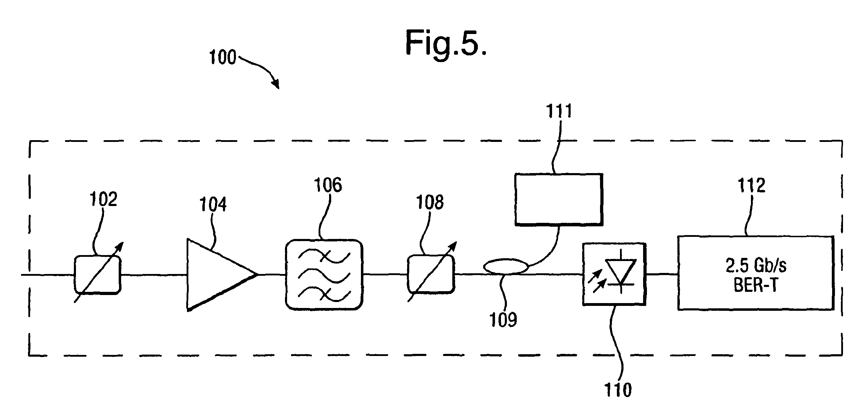

Figure 5 shows an optical receiver for use in the experimental setup of Figure 2, generally designated 100. The optical receiver 100 was used for producing the experimental results of Figures 6 - 9. The optical receiver 100 was used as the ONU 18 downstream optical receiver 38 and the CO node 12 upstream optical receiver 56 of Figure 2. In Figure 5 like features to the experimental setup in Figure 2 are shown with like reference numerals. The optical receiver 100 allows detailed BER measurements to be carried out for the received upstream and downstream optical data signals as discussed below. An optical data signal input to the optical receiver 100 firstly passes through a first receiver VOA 102, and then a receiver EDFA 104, and followed by a receiver BPF 106 centred about 0.8nm to suppress out-of-band noise. Together the receiver VOA 102, the receiver EDFA 104, and the receiver BPF 106 allow the Signal-to-Noise (SN) value to be varied so that it is possible to obtain BER graphs as a function ofSN value.

The optical data signal was then passed through a second receiver VOA 108 to adjust the optical power as required before being passed on to an asymmetrical splitter 109 which passed about 10% of the optical power of the optical data signal to an optical power meter 111 so that the power of the optical signal could be monitored and adjusted as required. The remaining 90% of the optical power of the optical data signal was passed from the asymmetrical splitter 36 to a photodetector 110 to convert the optical signal into an electrical signal which was then received by an electronic instrument 112. The photodetector used was a conventional 10 Gbps OOK receiver optimized for NRZ signals with a 9 GHz low-pass electrical filter. The photodetector 110 average input power was maintained at a constant level of -19dBm to ensure that thermal noise was negligible. Monitoring of the input power to the photodetector 110 was performed by the power meter 111. The electronic instrument 112 permitted the data signal to be electrically received and to perform BER measurements, and the results are presented with reference to Figures 6 - 9.

Figure 6 shows BER curves for the downstream and upstream signals. System performance as a function of the preamplifier average input powers were evaluated for different downstream ER values and different RSOA input power. Figure 6a shows results obtained with 3 dB downstream ER and an input power to the RSOA 40 from - 10 dBm to -5 dBm. Figure 6b shows results obtained with 4 dB downstream ER and an input power to the RSOA 40 from -10 dBm to -5 dBm. Figure 6c shows results obtained with 5 dB downstream ER and an input power to the RSOA 40 from -10 dBm to -5 dBm.

Figure 7 shows graphs of receiver sensitivity as a function of the main transmission parameters. Figure 7a illustrates the upstream sensitivity versus input power to the RSOA 40, and shows that the receiver sensitivity evaluated at a BER=10⁻⁹ improves more than 2.5 dB moving from -10 dBm to -5 dBm. This is due to the improved gain saturation of the RSOA 40 which makes the RSOA 40 more able to erase the downstream modulation (i.e. the data signal) and subsequently to recover the RZ signal carrier.

Figure 7b shows the receiver sensitivity against downstream ER for the upstream and downstream optical data signals at different input powers to the RSOA 40. The graphs show that as the downstream ER value increases from 3 dB to 5 dB, the upstream performance slightly deteriorates whilst the downstream performance improves more than 2.5 dBm.

Figures 6 and 7 show that an optimal condition is reached setting the downstream ER to 5 dB and the input power to the RSOA 40 to -5 dBm because the upstream and downstream performance tends to match which makes the overall system more balanced. It was also observed that a further increase of the downstream ER over 5 dB degrades the upstream performance due to inadequate downstream modulation erasing in the RSOA 40.

Figure 8 shows eye diagrams at various points in the experimental setup 60 of Figure 2 for a downstream ER of 5 dB and an input power to the RSOA 40 of -5 dBm. A threshold level shown at 120 illustrates an optical data signal representing a zero, and a threshold level shown at 122 illustrates an optical data signal representing a one. Figure 8a shows the optical data signal transmitted in the downstream direction in the optical fibre 16. Figure 8b shows the optical data signal received by the optical receiver 38 of the ONU 18. Figure 8c shows the optical data signal received by the photodetector 56 of the CO node 12.

Figure 9 shows graphs illustrating the upstream and downstream receiver sensitivity and illustrate the tolerance to residual dispersion in the optical fibre 16 of Figure 2. Figure 9 shows receiver sensitivity obtained in the case of full dispersion compensation and for two different accumulated dispersion values, 40 ps/nm and 85 ps/nm, once the ER and the input power to the RSOA 40 have been fixed to optimum values of 5 dB downstream ER and -5 dBm input power to the RSOA 40. The graphs of Fiugre 9 show that the sensitivity degrades as the residual dispersion of the optical fibre 16 increases. The performance of the upstream optical data signal is shown to be worse than the downstream optical data signal which was due to the distance travelled by the upstream signal being twice the distance travelled by the downstream signal. Overall Figures 8 and 9 show that the link residual chromatic dispersion has a good tolerance to the RZ format.

Figure 10 shows a flow diagram illustrating a method according to an embodiment of the invention. The method relates to operation of a communications network for providing communications services to at least one user. The method includes receiving 200 an optical signal comprising at least one Wavelength Division Multiplexing channel at a downstream direction, the channel comprising a carrier wavelength and optical data. The method may further include transmitting 202 the optical data to the at least one user. The method further includes substantially erasing 204 the data from the carrier wavelength. The method further includes receiving 206 user data from a downstream direction, modulating 208 the carrier wavelength with the user data, and transmitting 209 the user data in the upstream direction. In order to obtain a good erasing property of the downstream optical signal the method includes operating 210 a RSOA 40 substantially at or close to its gain saturation regime.

The above embodiments describe a bidirectional and dispersion tolerant 2.5 Gb/s WDM-PON based on a RZ modulation format. The WDM-PON can be operated in a symmetric manner such that the downstream data rate may be equal to the upstream data rate for a respective user. The WDM-PON uses a multi-wavelength RZ signal generator at the CO node 12, and at the RSOA 40 of the ONU 18.

The RZ-format has the advantage of being able to provide the same bit-rate for upstream and downstream communication between the provider and the user over the same carrier wavelength. Furthermore the shorter bit time duration due to the RZ-format improves the tolerance to dispersion effects when compared to a NRZ-format.

The RSOA 40 at the ONU 18 operates as a downstream modulation eraser, an upstream amplifier, and an upstream modulator which provides a reduction of the cost and complexity of the ONU 18 whilst avoiding the need for any additional active optical devices. Since the RSOA 40 also operates as an amplifier the power of the optical signal transmitted in the downstream direction can be reduced, hence reducing the overall link power. It will be appreciated that an advantage of the above described embodiments is that no lasers are required at the ONU 18. The above described embodiments show that error-free operation can be achieved for both 2.5 Gb/s downstream and upstream employing a 25 km long optical fibre with residual chromatic dispersion of 85 ps/nm and a receiver sensitivity of -32.5 dBm and -28 dBm for the downstream and the upstream respectively.

In the above described embodiments each ONU 18 is assigned a respective optical carrier frequency, but it will be appreciated that when implementing access using Time Division Multiplexing (TDM) each group of users would be assigned a respective optical carrier frequency. When implementing such a TDM-PON a TDM demultiplexer is required before the ONU 18 to process the downstream optical signal to separate data streams for respective users. A TDM multiplexer is also required to combine user data into an upstream data stream.

## Claims

1. An apparatus (18) arranged to receive a modulated optical signal (35) comprising a carrier wavelength (43) and optical data (37), the apparatus including an optical amplifier operable to erase the data (37) from the optical signal (35), to receive user data (49), and to modulate the carrier wavelength (43) with the user data (49) for onward transmission of the user data (49), **characterised in that** the apparatus is arranged to operate with the optical signal having a return-to-zero modulation format, and wherein the optical amplifier (40) is arranged to be operated near its gain saturation threshold (58) such that the amplifier is made to saturate when a higher level of the return-to-zero modulation format optical signal occurs and such that the amplifier is made to amplify when a laver level of the return-to-zero modulation format occurs.

2. An apparatus (18) according to claim 1 arranged to split (36) the received optical signal (35) into at least two portions (29, 31), each portion comprising the modulated optical signal (35).

3. An apparatus (18) according to claim 1 wherein the optical amplifier (40) is a reflective semiconductor optical amplifier (40).

4. An apparatus (18) according to any preceding claim arranged to transmit at least one of the modulated optical signal (35) in a downstream direction (33), and the user data (49) in an upstream direction (52).

5. An apparatus (18) according to any preceding claim and further arranged to transmit the received optical data (37) to a user device (59).

6. A method of providing communications services, the method including;
receiving (200) a modulated optical signal (35) comprising a carrier wavelength (43) and optical data (37); and
using an optical amplifier (40) to:
erasing (204) the data from the optical signal (35);
receive (206) user data (49); and
modulate (208) the carrier wavelength (43) with the user data (49) for onward transmission of the user data (49),
**characterised in that** the method includes receiving the optical signal with a return-to-zero modulation format, and further including operating (210) the optical amplifier (40) near its gain saturation threshold (58) such that the amplifier is made to saturate when a higher level of the return-to-zero modulation format optical signal occurs and such that the amplifier is made to amplify when a laver level of the return to zero modulation format occurs.

7. A method according to claim 6 and further including splitting (36) the received optical signal (35) into at least two portions (29, 31), each portion comprising the modulated optical signal (35).

8. A method according to claim 6 or 7 and further including transmitting (209) the user data (49) using the optical amplifier (40).

9. A method according to claim 8 and further including using a reflective semiconductor optical amplifier (40) as the optical amplifier.

10. A method according to any of claims 6 - 9 including transmitting (200) at least one of the modulated optical signal (35) in a downstream direction (33), and the user data (49) in an upstream direction (52).

11. A method according to any of claims 6 - 10 and further including transmitting (202) the received optical data (37) to a user device (59).

12. A communications network including an apparatus according to any of claims 1 - 5, or arranged to perform a method according to any of claims 6 - 11.

## Patentansprüche

1. Vorrichtung (18), die so ausgelegt ist, dass sie ein moduliertes optisches Signal (35) empfängt, das eine Trägerwellenlänge (43) und optische Daten (37) umfasst, wobei die Vorrichtung einen optischen Verstärker umfasst, der so betrieben werden kann, dass er die Daten (37) aus dem optischen Signal (35) löscht, Benutzerdaten (49) empfängt und die Trägerwellenlänge (43) mit den Benutzerdaten (49) zur Weitersendung der Benutzerdaten (49) moduliert, **dadurch gekennzeichnet, dass** die Vorrichtung so ausgelegt ist, dass sie mit dem optischen Signal mit einem Rückkehr-zu-null-Modulationsformat arbeitet, und wobei der optische Verstärker (40) so ausgelegt ist, dass er in der Nähe seiner Verstärkungssättigungsschwelle (58) betrieben wird, derart dass der Verstärker zum Sättigen veranlasst wird, wenn ein höherer Pegel des optischen Signals mit dem Rückkehr-zu-null-Modulationsformat auftritt, und derart, dass der Verstärker zum Verstärken veranlasst wird, wenn ein niedriger Pegel des Rückkehr-zu-null-Modulationsformats auftritt.

2. Vorrichtung (18) nach Anspruch 1, die so ausgelegt ist, dass sie das empfangene optische Signal (35) in mindestens zwei Abschnitte (29, 31) teilt (36), wobei jeder Abschnitt das modulierte optische Signal (35) umfasst.

3. Vorrichtung (18) nach Anspruch 1, wobei der optische Verstärker (40) ein reflektierender optischer Halbleiterverstärker (40) ist.

4. Vorrichtung (18) nach einem der vorhergehenden Ansprüche, die so ausgelegt ist, dass sie mindestens eines von dem modulierten optischen Signal (35) in einer Downstream-Richtung (33) und den Benutzerdaten (49) in einer Upstream-Richtung (52) sendet.

5. Vorrichtung (18) nach einem der vorhergehenden Ansprüche und ferner so ausgelegt, dass sie das empfangene optische Signal (37) an eine Benutzereinrichtung (59) sendet.

6. Verfahren zur Bereitstellung von Kommunikationsdiensten, wobei das Verfahren umfasst:
Empfangen (200) eines modulierten optischen Signals (35), das eine Trägerwellenlänge (43) und optische Daten (37) umfasst; und
Verwenden eines optischen Verstärkers (40) zum:
Löschen (204) der Daten aus dem optischen Signal (35);
Empfangen (206) von Benutzerdaten (49); und
Modulieren (208) der Trägerwellenlänge (43) mit den Benutzerdaten (49) zur Weitersendung der Benutzerdaten (49),
**dadurch gekennzeichnet, dass** das Verfahren ein Empfangen des optischen Signals mit einem Rückkehr-zu-null-Modulationsformat umfasst und ferner ein Betreiben (210) des optischen Verstärkers (40) in der Nähe seiner Verstärkungssättigungsschwelle (58) umfasst, derart dass der Verstärker zum Sättigen veranlasst wird, wenn ein höherer Pegel des optischen Signals mit dem Rückkehr-zu-null-Modulationsformat auftritt, und derart, dass der Verstärker zum Verstärken veranlasst wird, wenn ein niedrigerer Pegel des Rückkehr-zu-null-Modulationsformats auftritt.

7. Verfahren nach Anspruch 6 und ferner umfassend ein Teilen (36) des empfangenen optischen Signals (35) in mindestens zwei Abschnitte (29, 31), wobei jeder Abschnitt das modulierte optische Signal (35) umfasst.

8. Verfahren nach Anspruch 6 oder 7 und ferner umfassend ein Senden (209) der Benutzerdaten 49) unter Verwendung des optischen Verstärkers (40).

9. Verfahren nach Anspruch 8 und ferner umfassend ein Verwenden eines reflektierenden optischen Halbleiterverstärkers (40) als den optischen Verstärker.

10. Verfahren nach einem der Ansprüche 6 bis 9, umfassend ein Senden mindestens eines von dem modulierten optischen Signal (35) in einer Downstream-Richtung (33) und den Benutzerdaten (49) in einer Upstream-Richtung (52).

11. Verfahren nach einem der Ansprüche 6 bis 10 und ferner umfassend ein Senden (202) der empfangenen optischen Daten (37) an eine Benutzereinrichtung (59).

12. Kommunikationsnetz, umfassend eine Vorrichtung nach einem der Ansprüche 1 bis 5 oder ausgelegt zum Durchführen eines Verfahrens nach einem der Ansprüche 6 bis 11.

## Revendications

1. Dispositif (18) agencé pour recevoir un signal optique modulé (35) comprenant une longueur d'onde porteuse (43) et des données optiques (37), le dispositif incluant un amplificateur optique opérationnel afin d'effacer les données (37) du signal optique (35), recevoir les données d'utilisateur (49) et moduler la longueur d'onde porteuse (43) avec les données d'utilisateur (49) en vue d'une transmission avant des données d'utilisateur (49), **caractérisé en ce que** le dispositif est agencé afin de fonctionner avec le signal optique ayant un format de modulation de retour à zéro, et dans lequel l'amplificateur optique (40) est agencé afin de fonctionner près de son seuil de saturation de gain (58), de sorte que l'amplificateur soit amené à saturer quand un niveau plus élevé de signal optique à format de modulation de retour à zéro se produit, et de sorte que l'amplificateur soit amené à amplifier quand un niveau plus bas du format de modulation de retour à zéro se produit.

2. Dispositif (18) selon la revendication 1, agencé afin de diviser (36) le signal optique reçu (35) en au moins deux portions (29,31), chaque portion comprenant le signal optique modulé (35).

3. Dispositif (18) selon la revendication 1, dans lequel l'amplificateur optique (40) est un amplificateur optique à semi-conducteurs réflectif (40).

4. Dispositif (18) selon une quelconque des revendications précédentes agencé afin de transmettre au moins un du signal optique modulé (35) dans une direction en aval (33), et les données d'utilisateur (49) dans une direction en amont (52).

5. Dispositif (18) selon une quelconque des revendications précédentes et agencé en outre afin de transmettre les données optiques reçues (37) à un dispositif d'utilisateur (59).

6. Procédé de fourniture de services de communications, le procédé incluant de :
recevoir (200à) un signal optique modulé (35) comprenant une longueur d'onde porteuse (43) et des données optiques (37) ; et
utiliser un amplificateur optique (40) pour :
effacer (204) les données du signal optique (35) ;
recevoir (206) des données d'utilisateur (49) ; et
moduler (208) la longueur d'onde porteuse (43) avec les données d'utilisateur (49) en vue d'une transmission avant des données d'utilisateur (49),
**caractérisé en ce que** le procédé inclut de recevoir le signal optique avec un format de modulation de retour à zéro, et incluant en outre de faire fonctionner (210) l'amplificateur optique (40) près de son seuil de saturation de gain (58) de sorte qu' l'amplificateur soit amené à saturer quand un niveau plus élevé de signal optique à format de modulation de retour à zéro se produit et de sorte que l'amplificateur soit amené à amplifier quand un niveau plus bas du format de modulation de retour à zéro se produit.

7. Procédé selon la revendication 6 et incluant en outre de diviser (36) le signal optique reçu (35) en au moins deux portions (29,31), chaque portion comprenant le signal optique modulé (35).

8. Procédé selon les revendications 6 ou 7 et incluant en outre de transmettre (209) les données d'utilisateur (49) en utilisant l'amplificateur optique (40).

9. Procédé selon la revendication 8 et incluant en outre d'utiliser un amplificateur optique à semi-conducteurs réflectif (40) comme amplificateur optique.

10. Procédé selon une quelconque des revendications 6 à 9, incluant de transmettre (200) au moins un du signal optique modulé (35) dans une direction en aval (33), et les données d'utilisateur (49) dans une direction en amont (52).

11. Procédé selon une quelconque des revendications 6 à 10 et incluant en outre de transmettre (202) les données optiques reçues (37) vers un dispositif d'utilisateur (59).

12. Réseau de communications incluant un dispositif selon une quelconque des revendications 1 à 5, ou agencé afin de mettre en oeuvre un procédé selon une quelconque des revendications 6 à 11.
